# EUROPÄISCHE PATENTSCHRIFT

(11) **EP 0 679 703 B1**
(45) Veröffentlichungstag und Bekanntmachung des Hinweises auf die Patenterteilung: **09.06.1999**
(21) Anmeldenummer: 95105320.6
(22) Anmeldetag: 08.04.1995
(51) Int. Cl.: C09D 11/10

(54) **Verwendung einer wässrigen Druckfarbenzubereitung für deinkbare Publikationserzeugnisse**
Use of an aqueous printing ink composition for de-inkable publications
Utilisation d'une composition d'encre aqueuse d'imprimerie pour des publications aptes à désencrage

(30) Priorität: 29.04.1994 DE 4415007
(43) Veröffentlichungstag der Anmeldung: 02.11.1995
(73) Patentinhaber: Druckfarbenfabrik Gebr. Schmidt GmbH, D-60489 Frankfurt (DE); PPG INDUSTRIES (FRANCE) S.A., 59307 Valenciennes (FR)
(72) Erfinder: Schmidt, Helmut, Dr., D-61476 Kronberg-Schönberg (DE); Welt, Hans-Jürgen, D-61118 Bad Vilbel (DE); Wiegmann, Egon, D-52349 Düren (DE); Boulet, Olivier, F-59494 Petite Fôret (FR); Marthe, Jean-Pierre, F-59990 Estreux (FR)
(74) Vertreter: Pfeifer, Hans-Peter, Dr., Dr. H.-P. Pfeifer Dr. P. Jany, Patentanwälte

(56) Entgegenhaltungen:
- EP-A- 0 001 711
- EP-A- 0 043 130
- EP-A- 0 373 375
- WO-A-92/20750
- WO-A-94/06874
- DE-A- 3 243 532

## Beschreibung

Die Erfindung betrifft die Verwendung einer wäßrigen Druckfarbenzubereitung zur Produktion von deinkbaren Publikationserzeugnissen im Rollendruck auf Papier.

Unter Publikationserzeugnissen sind in größeren Auflagen (üblicherweise mehr als 10 000 Exempl.) produzierte Zeitungen, Zeitschriften, Werbeschriften, Telefonbücher, Kursbücher und Kataloge zu verstehen.

Unter Rollendruck im Gegensatz zum Bogendruck ist der Rotationsdruck zu verstehen, bei dem das Papier von einer Rolle in Form einer Bahn durch ein Druckwerk oder durch mehrere Druckwerke einer Druckmaschine geführt wird. Der fertige Druck wird entweder mittels nachgeschalteter Anlagenteile, z. B. einem Falzapparat, zu fertigen Publikationserzeugnissen weiterverarbeitet, oder er wird zunächst zu einer Rolle aufgewickelt und erst später weiterverarbeitet.

Allgemein gibt es seit Jahren wäßrige Druckfarben für den Rollendruck. Ihre wesentlichen Bindemittel sind sauer. Sie werden mit flüchtigen Basen, wie Ammoniak oder Aminen, neutralisiert bzw. schwach alkalisch eingestellt und können so wäßrige Lösungen und/oder stabile wäßrige Dispersionen bilden. Nach dem Verdrucken entweichen die Basen und das Wasser, so daß eine trockene, wasserunlösliche, gebundene Druckfarbenschicht entsteht.

Zu den technischen Nachteilen dieser allgemein bekannten Druckfarben gehört es, daß die damit hergestellten Drucke sich nicht im Flotationsverfahren deinken lassen. Beim Deinken wird das Altpapier aufgeschlagen (Faserstoff"Lösung" im Pulper) und dann flotiert. Weil beides notwendigerweise im wäßrig-alkalischen Ansatz durchgeführt wird, können darin die anionischen Bindemittel nicht so wasserfest bleiben wie z.B. die öligen bzw. lösemittellöslichen. Sie lösen sich größtenteils auf. Die Partikel der beim Aufschlagen von der Faser abgetrennten anionischen Druckfarbenschicht sind dann so hydrophil und so klein, daß sie sich nicht per Flotation im Schaum sammeln und austragen lassen. Zusammen mit den Fasern bleiben sie im Ansatz zurück und färben danach das Filtrat und das aus den Fasern hergestellte Recycling-Papierblatt an. Bereits geringe Anteile von derart schlecht deinkbaren Drucken können große Deinking-Ansätze anfärben und verderben.

Wenn statt oder nach der Flotation ein Waschverfahren durchgeführt wird, lassen sich diese Partikel entfernen. Das Waschverfahren wird aber nur ausnahmsweise installiert und durchgeführt, denn es liefert eine geringere Faser- und Füllstoff-Ausbeute. Außerdem wird dabei viel Wasser gebraucht und es fällt viel Abwasser an.

Das Aufkommen an per Deinking verwertbarem Altpapier besteht zum allergrößten Teil aus Publikationserzeugnissen. Deshalb müssen gerade diese gut und ausnahmslos deinkbar sein. Sie dürfen keine Drucke enthalten, bei denen die vorstehend erläuterten Probleme bestehen. Dies bedeutet, daß die bisher üblichen wäßrigen Druckfarben wegen ihrer schlechten Deinkbarkeit nicht für Publikationserzeugnisse geeignet sind. Wegen dieses wesentlichen Hindernisses kommen diese üblichen wäßrigen Druckfarben also allgemein und besonders dort, wo die Altpapierverwertung per Deinking wichtig genommen und durchgeführt wird, für die Produktion von Publikationserzeugnissen bisher nicht in Betracht.

Altpapier aus Packstoffen und Verpackungsmitteln wie Packpapier, Kartonagen, Wellpappe, Versandkartons, Papiersäcken, Papptrommeln usw. sowie solches aus ausgesonderten Akten, Formularen, Büromaterialien usw. wird im wesentlichen dem gemischten Altpapier zugerechnet und ist weniger wert als das aus Publikationserzeugnissen. Dieses gemischte Altpapier wird in der Regel nicht deinkt, sondern zu grauen bis bräunlichen Papier- und Pappesorten verarbeitet. Hingegen wird weitgehend sortenreines Altpapier aus Publikationserzeugnissen zu möglichst großen Anteilen deinkt und zu hinreichend weißem Druckpapier für Publikationserzeugnisse verarbeitet. In verschiedenen Ländern wird Altpapier in unterschiedlichem Ausmaß verwertet.

Von einer in der Praxis ausreichenden Deinkbarkeit kann man sprechen, wenn das betreffende Altpapier bei Anwendung der eingeführten und üblichen Flotationstechnik einschließlich der eingeführten Vor- und Nachstufen einen hinreichend gut verarbeitbaren und hinreichend weißen Rohstoff für die Herstellung von Zeitungsdruckpapier ergibt. Ein Altpapier, mit dem man dies nicht erreicht, wird vereinfachend als nicht deinkbar bezeichnet. In der Regel wird ein Weißgrad von mindestens 58 % gefordert (58 % Reflexion bei 457 nm Lichtwellenlänge).

Neben diesem für die betriebliche Praxis gebräuchlichen Qualitätsmaßstab werden für im Labor durchzuführende Entwicklungsarbeiten noch zwei andere Maßstäbe angewandt. Wenn man dort möglichst viele Einflußgrößen konstant hält und möglichst praxisnah gestaltet, so z. B. die Bauart und Wirkungsweise der Flotationszelle und die Zusammensetzung der Deinking-Chemikalien, kann man z. B. bei konstanten Druckbedingungen und Druckfarben die Eigenschaften des Papiers variieren oder unter Konstanthaltung der übrigen Einflußgrößen die der Druckfarbe. Bei kleineren Laboransätzen geht auch die mit dem Druckvorgang gegebene Massenrelation Papier zu Druckfarbe in das Ergebnis ein. Deshalb müssen als weitere Meßgrößen der Weißgrad des bedruckten und aufgeschlagenen, aber nicht flotierten Faserstoffs (WG(BS)) sowie derjenige einer in gleicher Weise durch den Prozeß geführten Probe des unbedruckten Druckpapiers (WG(US)) bestimmt werden. Für den Vergleich mit dem Weißgrad des deinkten Stoffs (WG(DS)) gibt es zwei Möglichkeiten. WG(DS) minus WG(BS) ist der Weißgradgewinn (WGG). WGG geteilt durch die Differenz von WG(US) und WG(BS) und dann mit 100 malgenommen nennt man DEM (Deinking-Maßzahl). Die DEM-Formel ist eine lineare Vereinfachung für die nichtlineare Relation zwischen der Massenkonzentration der Druckfarbe und dem optisch gemessenen Weißgrad. Je höher WGG oder DEM, als desto besser ist nach diesen Maßstäben das Deinking-Ergebnis. Zeitungsoffset erreicht 40 bis 70 DEM,

Illustrationstiefdruck 60 bis 75 DEM, konventionelle Drucke mit anionischen wäßrigen Druckfarben erreichen nach dem bisherigen Stand der Technik weniger als 30 DEM.

Neben den meßbaren Weißgradwerten können im deinkten Faserstoff sichtbare dunkle Fleckchen (Melierfasern) festgestellt werden, die aus bei der Flotation nicht entfernten angefärbten Fäserchen oder Druckfarbenpartikeln bestehen. Sie können mit dem Auge abgeschätzt oder mit dem Scanner zahlenmäßig erfaßt werden.

Wo sowohl die Altpapierverwertung als auch der Einsatz von wäßrigen Druckfarben weit fortgeschritten sind, besteht zunehmend der Wunsch nach Publikationserzeugnissen, die mit wäßrigen Druckfarben hergestellt und dennoch deinkbar sind.

Zur Abhilfe wurde u.a. bei den für das Deinking-Verfahren verwendeten Chemikalien mit kationischen Tensiden experimentiert. Es wurden auch bei den Druckfarben kationische statt der üblichen anionischen Bindemittel eingesetzt (z.B. DE-A-41 15 731). Diese Bindemittel sind also basisch und werden mit flüchtigen Säuren neutralisiert. Verständlicherweise lassen sich Drucke mit derartigen, ebenfalls wasserfest aufgetrockneten Druckfarbenschichten im alkalischen Ansatz deinken.

Die kationischen Bindemittel haben aber auch Nachteile. Die flüssige Druckfarbe ist nicht, wie sonst üblich, alkalisch, sondern sauer eingestellt. Ihre im wäßrigen Medium fein verteilten Feststoff-Partikel verhalten sich elektrochemisch umgekehrt wie diejenigen aller sonst üblichen Druckfarben. Das kationische Bindemittel ist deshalb mit vielen üblichen Druckfarben-Einsatzstoffen und mit konventionellen wäßrigen Druckfarben und zugehörigen Druckhilfsmitteln nicht oder nicht ohne weiteres verträglich. Die Druckmaschinen lassen sich mit den üblichen neutralen oder alkalischen Mitteln noch schlechter von angetrockneter Druckfarbe reinigen, als es bei Verwendung von wäßrigen Druckfarben mit anionischen Bindemitteln der Fall ist. Diese Nachteile trugen dazu bei, daß derartige kationische Druckfarben keine praktische Bedeutung erlangt haben.

Aus der WO94/06874 ist eine Wasserfarbe zur Herstellung von deinkbaren Druckerzeugnissen bekannt, deren Bindemittelzubereitung nichtionische und/oder selbstrernetzende Harze sowie mindestens einen niedrig siedenden Alkohol enthält.

Der Erfindung liegt die Aufgabe zugrunde, eine Verfahrensweise zum Drucken von Publikationserzeugnissen zur Verfügung zu stellen, bei der die Druckfarbe wäßrig ist, die vorstehend erwähnten anwendungstechnischen Probleme vermieden werden und eine ausreichende Deinkbarkeit mit dem üblichen Flotationsverfahren erreichbar ist.

Die Aufgabe wird dadurch gelöst, daß für die Herstellung von deinkbaren Publikationserzeugnissen im Rollendruck auf Papier eine wäßrige Druckfarbenzubereitung verwendet wird, welche ein Bindemittel auf Basis einer anionischen makromolekularen Verbindung enthält. "Auf Basis" ist dabei so zu verstehen, daß die makromolekulare Verbindung den für die Bindungseigenschaften entscheidenden Anteil des Bindemittels der Druckfarbenzubereitung bildet, also dessen Wirksubstanz ist. Dabei können eine oder mehrere makromolekulare Verbindungen eingesetzt werden. Daneben enthalten Bindemittel für Druckfarbenzubereitungen manchmal Zusätze wie Weichmacher oder Tenside.

Im Hinblick auf möglichst gute Verarbeitungseigenschaften wird die Druckfarbenzubereitung durch Zugabe einer basischen Substanz auf einen pH-Wert zwischen 7,5 und 12,5 eingestellt.

Vorzugsweise ist die makromolekulare Verbindung in einer Trägerflüssigkeit dispergiert, welche in der Regel aus Wasser oder einer Mischung von Wasser und einem organischen Lösungsmittel besteht.

Die makromolekularen Verbindungen, welche die Basis des Bindemittels der Druckfarbenzubereitung bilden, zeichnen sich durch die folgenden Merkmale aus:

Sie haben mittlere Molekulargewichte (MG) von mehr als 25000, vorzugsweise mehr als 50000, besonders bevorzugt mehr als 100000, und Säurezahlen (SZ) von mödestens 70, vorzugsweise weniger als 50, besonders bevorzugt weniger als 30. Vorzugsweise haben die makromolekularen Verbindungen Einfriertemperaturen (Glastemperaturen) (Tg) von weniger als +50°C, vorzugsweise weniger als +20°C, besonders bevorzugt weniger als +10°C. Diese drei Merkmale, mit denen sich makromolekulare Verbindungen in besonderem Maße für Bindemittel in anionischen wäßrigen Druckfarbenzubereitungen für deinkbare Drucke eignen, führen vor allem kombiniert zum angestrebten Ergebnis. Im Allgemeinen wird unter sonst vergleichbaren Bedingungen und im Rahmen dieser Erfindung die Deinkbarkeit bei höheren Molekulargewichten (MG) besser als bei niedrigeren, bei niedrigeren Einfriertemperaturen (Tg) besser als bei höheren und bei niedrigeren Säurezahlen (SZ) besser als bei höheren. Am besten wird die Deinkbarkeit, wenn die drei genannten Merkmale zugleich zutreffen. Wenn bei einem Bindemittel ein oder zwei der Merkmale nicht im optimalen Bereich liegen, läßt sich in gewissem Rahmen eine befriedigende Deinkbarkeit auch dadurch erreichen, daß die übrigen Merkmale optimiert werden. Mitunter kann eine verbesserte Deinkbarkeit dadurch erreicht werden, daß man bei der Herstellung der Druckfarben mehrere verschiedene Verbindungen mischt.

Die erfindungsgemäß als Bindemittel einzusetzenden makromolekularen Verbindungen können grundsätzlich chemisch verschiedenartig zusammengesetzt sein. Vor allem sind Polymerisationsprodukte von Monomeren mit C=C-Doppelbindungen verwendbar. Diese können Carboxylgruppen enthalten wie Acrylsäure, Methacrylsäure, Itaconsäure, Maleinsäure, Fumarsäure usw. Hinzu gehören Ester oder Amide dieser Säuren. Hierbei sind ein- oder mehrwertige Alkohole und entsprechende stärker reagierende Verbindungen, wie z.B. Ethylenoxid, als Veresterungskomponenten einsetzbar. Weitere Monomere sind Styrol, Vinyltoluol, Acrylnitril, Vinylacetat usw. Zu den erfindungsgemäß vorteilhaft einsetzbaren makromolekularen Verbindungen gehören auch Polyurethane und Polyester. Oft ist es für die Herstellung und Verwendung der erfindungsgemäßen Druckfarben günstig, wenn die eingesetzten makromolekularen Verbindungen eine gewisse Anzahl von Hydroxylgruppen haben (OH-Zahlen zwischen 0 und 140). Welche Monomere bzw. sonstigen Reaktionspartner eingesetzt und in welchen Kombinationen sie mischpolymerisiert bzw. kondensiert werden, richtet sich nach den Eigenschaften, die bei den resultierenden makromolekularen Verbindungen verlangt werden. Deren Auswahl und die Durchführung der zugehörigen Reaktionen sind dem Fachmann geläufig.

Zur Herstellung der erfindungsgemäßen Druckfarben werden wie erwähnt die Bindemittel in Form einer Dispersion mit 7,5 bis 12,5 pH, vorzugsweise 8 bis 11 pH eingesetzt. Eine Dispersion ist eine mehr oder weniger trübe Flüssigkeit. Dabei ist der Begriff Dispersion im allgemeinen Sinn dahingehend zu verstehen, daß er sowohl Suspensionen als auch Emulsionen einschließt. Ein Teil der makromolekularen Verbindung kann in der Trägerflüssigkeit gelöst sein.

Im Rahmen der Erfindung werden zur Neutralisation der grundsätzlich anionischen Bindemittel vor allem Ammoniak und verschiedene Amine als kationische Komponenten eingesetzt. Mit deren Auswahl und Kombination läßt sich regeln, wie schnell die anionischen Bindemittel frei werden und trockene, wasserunlösliche Schichten bilden, außerdem, wie schnell und wie weitgehend Reste dieser Neutralisierungsmittel aus der Schicht verschwinden. Je nach den anwendungstechnischen Notwendigkeiten können anteilweise auch nichtflüchtige Neutralisierungsmittel eingesetzt werden. Dieser Trocknungsmechanismus entspricht dem Stand der Technik und ist mit den erfindungsgemäß eingesetzten Bindemitteln ohne weiteres anwendbar.

Die Bindemittel-Verbindungen benetzen die üblichen Pigmente und vertragen sich mit den üblichen sonstigen Druckfarben-Einsatzstoffen, Druckhilfsmitteln usw. Die damit zubereiteten Druckfarben sind im Rahmen des technisch Erforderlichen und Üblichen lagerfähig. Sie sind gut verdruckbar. Die Druckmaschinen lassen sich mit geeigneten Mitteln ähnlich reinigen wie bei den Druckfarben mit bisher üblichen anionischen wäßrigen Bindemitteln.

Anionische Bindemittel der vorstehend genannten Art sind schon für bestimmte Druckfarben und Druckerzeugnisse eingesetzt worden, ohne daß erkannt wurde, daß eine Auswahl von ihnen für die Herstellung von Drucken verwendbar ist, die sich per Flotation deinken lassen. Derartige vorbekannte Druckfarben sind bisher nicht für die Herstellung von Publikationserzeugnissen verwendet worden. Bei dem vorbekannten Einsatz handelt es sich vor allem um das Bedrucken von Packstoffen und Packmitteln, daneben um den Tapetendruck.

Beim Verpackungsdruck werden besonders hohe Anforderungen, z.B. an die Beständigkeit gegen die verschiedensten Füllgüter, Reinigungsvorgänge, Transport- und Lagerungsbedingungen gestellt, außerdem z. B. an die Heißsiegelfähigkeit oder Heißsiegelfestigkeit. Mit den in den erfindungsgemäß eingesetzten Bindemittel-Verbindungen zumeist vorhandenen Carboxyl- und Hydroxylgruppen ergeben sich für den Verpackungsdruck günstige Löslichkeits-, Netzund Haftfähigkeits-Eigenschaften, die zu guter Verdruckbarkeit und Beständigkeit beitragen. Sie erleichtern außerdem die erforderliche Spezialisierung auf den jeweiligen Einzelfall, dabei auch eine breite Kombinationsmöglichkeit mit weiteren Druckfarben-Einsatzstoffen. Außerdem läßt sich damit in Zweikomponenten-Systemen die Reaktion mit Vernetzern wie z. B. Isocyanaten, Propylenimin-Derivaten oder Melamin zur weiteren Steigerung der Beständigkeit auszunutzen. Alle diese Eigenschaften machen sie speziell für das Bedrucken von vielen verschiedenartigen Packstoffen (auch schwierig zu bedruckenden Folien) und für die Erfüllung der vielen verschiedenen Beständigkeitsanforderungen des Verpackungsdrucks besonders geeignet.

Bei der Produktion von Publikationserzeugnissen sind die Anforderungen an die Benetzung, die Haftung und die Beständigkeit geringer. Höhere Anforderungen werden dagegen an die störungsfreie Verdruckbarkeit wegen der durchschnittlich breiteren und schneller durchlaufenden Papierbahnen gestellt. Auch wird hier im allgemeinen beidseitig gedruckt. Bilder und Schrift sollen auch auf dünnem und mehr oder weniger unebenem Papier bei hohen Produktionsgeschwindigkeiten möglichst scharf und schön wiedergegeben werden.

Die Produktionsanlagen für die Herstellung von Publikationserzeugnissen unterscheiden sich sehr von denen für andere Druckerzeugnisse. Entsprechendes trifft für die Druckfarben zu, deren anwendungstechnische Eigenschaften wie Fließ-, Benetzungs- und Trocknungsverhalten, Farbtönung, Glanz und Scheuerfestigkeit den jeweiligen Einsatzzwecken angepaßt werden muß. Von den Publikationserzeugnissen zu unterscheiden sind beispielsweise die verschiedenen Packmittel und Packstoffe, außerdem Etiketten, Büromaterialien, Formulare, Gebrauchsanweisungen, Kalender, Landkarten, Wertzeichen, Plakate, Möbeldekore, Tapeten.

Mit den nachstehenden Beispielen wird veranschaulicht, wie erfindungsgemäß gut deinkbare Drucke technisch erzielbar sind. Mit ihnen soll jedoch der Umfang der Erfindung und ihrer praktischen Anwendung in keiner Weise eingeschränkt werden. Selbstverständlich können im Rahmen der Erfindung die Druckfarben z.B. hinsichtlich ihrer sonstigen Einsatzstoffe (dabei auch zusätzliche Bindemittel sowie wassermischbare Lösemittel), ihrer Pigmente, ihrer Pigment-Bindemittel-Relationen, ihrer Feststoffgehalte und ihrer Fließeigenschaften in der Variationsbreite der üblichen Druckfarbentechnik uneingeschränkt abgewandelt werden. Auch bei der Herstellung der Publikationserzeugnisse fällt die volle Variationsbreite z.B. hinsichtlich der Drucktechnik, der Druckmaschinen, der Druckmotive, der Druckgeschwindigkeit und der Weiterverarbeitung in den Rahmen der Erfindung.

### Beispiel 1

1000 g einer wäßrigen Polyacrylat-Dispersion (Mischpolymerisat von Estern der Acryl- und Methacrylsäure mit Hydroxyl- und Carboxylgruppen) mit 45 % Feststoff, einem mittleren Molekulargewicht (MG) von mehr als 250 000, einer Einfriertemperatur (Tg) von +5 °C, einer Säurezahl (SZ) 10, einem mittleren Partikeldurchmesser (PG) von 80 nm und einer OH-Zahl 40 wurden mit 36g 25%iger Ammoniaklösung auf 9,5 pH eingestellt.

Zu 450g dieser alkalischen Harz-Dispersion wurden 100g Wasser zugesetzt. Dann wurden 120g Farbruß mit Hilfe von Dissolver und Rührwerkskugelmühle eingearbeitet. Diesem Ansatz wurden dann 1g eines Entschäumers und 299g Wasser zugegeben.

Die resultierende Druckfarbenzubereitung wurde im rotativen Flexodruck auf maschinenglattem Zeitungsdruckpapier 47 g/m² (Weißgrad 56,6 %) mit Schrift und Flächen gedruckt, und zwar mit einer optischen Vollflächen-Dichte gegen Papierweiß von 0,95.

Der Druck wurde nach der standardisierten Methode PTS-RH : 010/87 vom Januar 1987 deinkt.

An derart hergestellten Probeblättern wurden die folgenden Meßwerte (Mittelwerte) ermittelt:

| | |
|---|---|
| WG(US) | 59,1 % |
| WG(BS) | 51,2 % |
| WG(DS) | 59,0 % |
| | |
| DEM | 99 |

### Beispiele 2 bis 6

Die Beispiele 2 bis 6 wurden in gleicher Weise wie das Beispiel 1, jedoch mit anderen Bindemitteldispersionen, ausgeführt. Chemisch entsprechen die Beispiele 2 bis 6 dem Beispiel 1. Die Bindemittel der Beispiele 3, 4, 5 und 6 haben jedoch keine Hydroxylgruppen, das des Beispiels 5 keine Acrylsäure, jedoch Methacrylsäure, das des Beispiels 6 keine Methacrylsäure, jedoch Acrylsäure (bzw. jeweils deren Ester), das des Beispiels 4 zusätzlich Styrol und das des Beispiels 6 zusätzlich Vinyltoluol.

Hinsichtlich des Neutralisierungsgrades und des Feststoffgehaltes bestanden folgende Unterschiede zwischen den verwendeten Dispersionen.

Bei den Beispielen 1, 2, 3 und 4 war die Ausgangsdispersion nur zur Hälfte neutralisiert und zwar mit Dimethylethanolamin. Sie wurde unmittelbar vor ihrer Verwendung in den Beispielen so mit Ammoniak durchneutralisiert, wie dies in Beispiel 1 angegeben ist. Die Ausgangsdispersion für das Beispiel 5 war mit Dimethylethanolamin, diejenige für das Beispiel 6 mit Ammoniak durchneutralisiert, so daß keine ergänzende Neutralisierung vorgenommen wurde. Der pH-Wert bei der Anwendung war in allen Fällen etwa 9,5.

Der Feststoffgehalt der Dispersionen betrug bei Beispiel 2 43%, bei Beispiel 3 46%, bei Beispiel 4 40%, bei Beispiel 5 35% und bei Beispiel 6 35%.

In der nachfolgend wiedergegebenen Tabelle, die die Ergebnisse der Beispiele zeigt, ist erkennbar, daß das Deinking-Ergebnis sich in dem Maße verschlechtert, wie von den drei bevorzugten Merkmalen abgewichen wird. Beim Beispiel 4 erreicht die DEM noch einen guten Wert; der Weißgrad des deinkten Stoffes liegt aber bereits etwas unterhalb von 58 %. Die Deinking-Ergebnisse der Beispiele 5 und 6 sind unzureichend.

| **Bindemittel** | | | | **Deinking-Ergebnis** | | | |
|---|---|---|---|---|---|---|---|
| Beispiel Nr. | mittl. Molekular. gewicht | Tg °C | Säurezahl | WG (US) % | WG (BS) % | WG (DS) % | DEM |
| 2 | > 250000 | + 5 | 4 | 59,1 | 51,4 | 58,9 | 97 |
| 3 | > 250000 | + 5 | 10 | 59,1 | 52,1 | 58,7 | 94 |
| 4 | 30000 | + 35 | 62 | 58,9 | 43,9 | 56,4 | 83 |
| 5* | 12000 | + 75 | 53 | 58,9 | 41,1 | 49,2 | 45 |
| 6* | 11000 | + 95 | 200 | 60,0 | 46,0 | 47,0 | 7 |

| | | | | | | | |
|---|---|---|---|---|---|---|---|
| * Vergleich | | | | | | | |

Real ist bei den Beispielen 5, 6 und 7 die Deinkbarkeit noch schlechter, als es die Zahlenwerte von WG (DS) und DEM anzeigen. Bei der angewandten Labormethode werden die Stoffblätter auf einer Nutsche gebildet, die Reflexion wird auf deren Oberseiten gemessen. Bei schlecht deinkbaren Drucken, wie hier bei den Beispielen 5, 6 und 7, wandern beim Nutschen feine, nicht mit der Flotation ausgetragene Druckfarbenpartikel von der Blattoberseite zur Blattunterseite und teilweise bis ins Filtrat. Dadurch wird die nicht optisch gemessene Blattunterseite auffallend dunkler, und zwar vor allem an den sich deutlich abbildenden Nutschenlöchern. Auch das Filtrat wird trübe und grau. Dies tritt besonders bei den Blättern des deinkten Stoffs (DS) ein, wesentlich weniger bei denen des bedruckten Stoffs (BS). Bei gut deinkbaren Drucken, wie hier den Beispielen 1 bis 4, sind die Stoffblätter durchgehend einheitlich und die Filtrate blank. Hier entsprechen die Zahlenwerte eher der Realität.

Bei allen Beispielen 1 bis 6 waren die deinkten Stoffblätter frei von Melierfasern oder sonstigen derartigen Fleckchen.

### Beispiel 7 (Vergleich)

Ein Exemplar der britischen Tageszeitung "Daily Mail" vom 18.02.94, das im Flexodruck mit anionischen wäßrigen Druckfarben nach dem bisherigen Stand der Technik hergestellt worden war (Flächengewicht des Papiers 43,8 g/m², opt. Dichte der Vollflächen 1,05 bis 1,20), wurde im Labor nach der standardisierten Methode PTS-TH: 010/87 deinkt. Dazu wurden als unbedrucktes Papier die Randstreifen und als bedrucktes Papier ausschließlich Schwarz-Weiß-Drucke genommen.

Deinking-Ergebnisse:
WG(US) 58,9% WG(BS) 26,1%
WG(DS) 32,0%
DEM 18

Real ist die Deinkbarkeit noch schlechter (siehe Bemerkung zu den Beispielen 2 bis 6)

Dies zeigt deutlich, daß Publikationserzeugnisse mit bisherigen wäßrigen Druckfarbenzubereitungen schlecht deinkbar sind. Aus diesem Grund werden in Ländern, in denen auf die Deinkbarkeit Wert gelegt wird, für Publikationserzeugnisse keine wäßrigen Druckfarben verwendet.

## Patentansprüche

1. Verwendung einer wäßrigen Druckfarbenzubereitung, welche ein Bindemittel auf Basis einer anionischen makromolekularen Verbindung enthält, für die Herstellung von deinkbaren Publikationserzeugnissen im Rollendruck auf Papier, wobei die makromolekulare Verbindung eine Säurezahl von höchstens 70 und ein mittleres Molekulargewicht von mindestens 25 000 hat und die Druckfarbenzubereitung durch Zugabe einer basischen Substanz auf einen pH-Wert zwischen 7,5 und 12,5 eingestellt ist.

2. Verwendung nach Anspruch 1, bei welcher die makromolekulare Verbindung eine Säurezahl von höchstens 50, besonders bevorzugt höchstens 30 hat.

3. Verwendung nach einem der vorhergehenden Ansprüche, bei welcher die makromolekulare Verbindung ein mittleres Molekulargewicht von mehr als 50 000, bevorzugt mehr als 100 000 hat.

4. Verwendung nach einem der vorhergehenden Ansprüche, bei welcher die makromolekulare Verbindung eine Einfriertemperatur von höchstens 50°C, bevorzugt höchstens 20°C, besonders bevorzugt höchstens 10°C hat.

5. Verwendung nach einem der vorhergehenden Ansprüche, bei welcher die makromolekulare Verbindung eine OH-Zahl zwischen 0 und 140 hat.

6. Verwendung nach einem der vorhergehenden Ansprüche, bei welcher die makromolekulare Verbindung in einer Trägerflüssigkeit dispergiert ist.

7. Verwendung nach einem der vorhergehenden Ansprüche, bei welcher die Druckfarbenzubereitung auf einen pH-Wert zwischen 8 und 11 eingestellt ist.

8. Verwendung nach einem der vorhergehenden Ansprüche, bei welcher die makromolekulare Verbindung ein Polymer oder Copolymer mindestens eines Monomers mit mindestens einer C=C-Doppelbindung ist, welches eine Carbonsäure, ein Carbonsäureester, ein Carbonamid oder ein Carbonnitril oder ein aromatischer Kohlenwasserstoff ist.

9. Verwendung nach Anspruch 8, bei welcher die makromolekulare Verbindung ein Polymer oder Copolymer der Acrylsäure und/oder der Methacrylsäure bzw. deren Derivate, insbesondere Ester, ist.

10. Verwendung nach Anspruch 8 oder 9, bei welcher die makromolekulare Verbindung ein Copolymer mit einem eine C=C-Doppelbindung enthaltenden Monomer, insbesondere Styrol oder Vinyltoluol ist.

11. Verwendung nach einem der Ansprüche 1 bis 7, bei welcher die makromolekulare Verbindung ein Polyurethan oder ein Polyester ist.

## Claims

1. Use of a water based printing ink preparation, containing a binder based on an anionic macromolecular compound, for the production of deinkable publication products by web fed rotary printing on paper, whereby the macromolecular compound has a maximum acid value of 70 and an average molecular weight of at least 25 000 and the ink preparation being adjusted to a pH value between 7,5 and 12,5 by an alkaline substance.

2. Use according to Claim 1, whereby the macromolecular compound has a maximum acid value of 50, preferably of 30.

3. Use according to one of the preceding Claims, whereby the macromolecular compound has an average molecular weight of more than 50 000, preferably more than 100 000.

4. Use according to one of the preceding Claims, whereby the macromolecular compound has a maximum glass transition temperature of 50°C, preferably of 20°C, and especially preferred of 10°C.

5. Use according to one of the preceding Claims, whereby the macromolecular compound has a hydroxyl value of between 0 and 140.

6. Use according to one of the preceding Claims, whereby the macromolecular compound is dispersed in a carrier liquid.

7. Use according to one of the preceding Claims, whereby the printing ink preparation is adjusted to a pH value between 8 and 11.

8. Use according to one of the preceding Claims, whereby the macromolecular compound is a polymer or a copolymer of at least one monomer with at least one C=C double bond, which is a carboxylic acid, an ester of a carboxylic acid, a carboamide, a carbonitrile or an aromatic hydrocarbon.

9. Use according to Claim 8, wherein the macromolecular compound is a polymer or a copolymer of acrylic acid and/or methacrylic acid and/or their derivatives, especially their esters.

10. Use according to Claims 8 or 9, wherein the macromolecular compound is a copolymer obtained by a C=C double bond containing monomer, especially styrene or vinyltoluene.

11. Use according to one of the Claims 1 to 7, wherein the macromolecular compound is a polyurethane or a polyester.

## Revendications

1. Utilisation d'une préparation aqueuse d'encre d'impression, qui contient un liant à base d'un composé macromoléculaire anionique, pour la production de produits désencrables du type publications, obtenues par impression du papier avec une machine à bobines, le composé macromoléculaire ayant un indice d'acide d'au maximum 70 et un poids moléculaire moyen d'au moins 25 000, cette préparation étant ajustée, par addition d'une substance basique, à une valeur de pH comprise entre 7,5 et 12,5.

2. Utilisation selon la revendication 1, dans laquelle le composé macromoléculaire a un indice d'acide d'au maximum 50, et de façon particulièrement préférée d'au maximum 30.

3. Utilisation selon l'une des revendications précédentes, dans laquelle le composé macromoléculaire a un poids moléculaire moyen supérieur à 50 000, de préférence supérieur à 100 000.

4. Utilisation selon l'une quelconque des revendications précédentes, dans laquelle le composé macromoléculaire a une température de congélation d'au maximum 50°C, de préférence d'au maximum 20°C et de façon plus particulièrement préférée d'au maximum 10°C.

5. Utilisation selon l'une quelconque des revendications précédentes, dans laquelle le composé macromoléculaire a un indice de OH compris entre 0 et 140.

6. Utilisation selon l'une quelconque des revendications précédentes, dans laquelle le composé macromoléculaire est dispersé dans un véhicule liquide.

7. Utilisation selon l'une quelconque des revendications précédentes dans laquelle la préparation d'encré d'impression est ajustée, à une valeur de pH comprise entre 8 et 11.

8. Utilisation selon l'une quelconque des revendications précédentes, dans laquelle le composé macromoléculaire est un polymère ou copolymère d'au moins un monomère comportant au moins une double liaison C=C, qui est un acide carboxylique, un ester d'un acide carboxylique, un carbonamide ou un carbonitrile ou un hydrocarbure aromatique.

9. Utilisation selon la revendication 8, dans laquelle le composé macromoléculaire est un polymère ou copolymère de l'acide acrylique et/ou de l'acide méthacrylique ou de leurs dérivés, en particulier un ester.

10. Utilisation selon l'une des revendications 8 ou 9, dans laquelle le composé macromoléculaire est un copolymère obtenu avec un monomère contenant une double liaison C=C, en particulier le styrène ou le vinyl toluène.

11. Utilisation selon l'une quelconque des revendications 1 à 7, dans laquelle le composé macromoléculaire est un polyuréthanne ou un polyester.
